# EUROPÄISCHE PATENTSCHRIFT

(11) **EP 1 340 353 B1**
(45) Veröffentlichungstag und Bekanntmachung des Hinweises auf die Patenterteilung: **02.11.2005**
(21) Anmeldenummer: 01990278.2
(22) Anmeldetag: 06.12.2001
(51) Int. Cl.: H04L 29/06, H04L 12/66, H04L 29/12

(54) **Verfahren zur Durchführung von Überwachungsmassnahmen in Telekommunikations- und Datennetzen mit beispielsweise IP-Protokoll**
Method for executing monitoring measures in telecommunications networks and data networks with, for example, an IP protocol
Procédé permettant d'exécuter des mesures de surveillance dans des réseaux de télécommunication et des réseaux de données à l'aide, par exemple, du protocol IP

(30) Priorität: 07.12.2000 DE 10061128
(43) Veröffentlichungstag der Anmeldung: 03.09.2003
(73) Patentinhaber: T-Mobile Deutschland GmbH, 53227 Bonn (DE)
(72) Erfinder: KELLER, Walter, 40880 Ratingen (DE)
(74) Vertreter: Riebling, Peter
(86) Internationale Anmeldenummer: PCT/DE2001/004573
(87) Internationale Veröffentlichungsnummer: WO 2002/047353

(56) Entgegenhaltungen:
- WO-A-00/56029
- WO-A-99/17499
- US-A- 6 104 711
- 3GPP: "UMTS; 3G Security; Lawful Interception Architecture and Functions" ETSI, [Online] Dezember 2000 (2000-12), Seiten 1-53, XP002212355 Gefunden im Internet: <URL:http://ftp.die.net/mirror/cryptome/es py/TS133-107.pdf> [gefunden am 2002-09-04]

## Beschreibung

Die Erfindung betrifft ein Verfahren zur Durchführung von Überwachungsmaßnahmen in Telekommunikations- und Datennetzen, nach dem Oberbegriff des unabhängigen Patentanspruchs.

In der Bundesrepublik Deutschland erfolgt die Überwachung von Telekommunikationsdiensten gemäß den geltenden gesetzlichen Bestimmungen. Vergleichbare Vorschriften finden sich in der Gesetzgebung fast aller Staaten.

Die prinzipielle Verfahrensweise zur Durchführung von Teilnehmer-Überwachungsmaßnahmen in mobilen Telekommunikationsnetzen ist beispielsweise in ETSI GSM 03.33 (Tdoc SMG10 98 D047) beschrieben.

Paketorientierte Telekommunikationsnetze sind beispielsweise zellulare Mobilfunknetze nach dem GSM-Standard mit GPRS-Übertragungsverfahren (ETSI GSM 03.60).
Im Gegensatz zu leitungsvermittelten Diensten werden hierbei die einzelnen Datenpakete mit TCP/IP-Protokoll (gemäß Internet Engineering Task Force IETF-Standard RFC 793/RFC 791) einzeln im Netz übertragen. Somit kann bereits auf der Luftschnittstelle sowie im weiterführenden Netz eine Mehrfachnutzung mehrerer Kunden im Timesharing-Verfahren auf den gleichen Übertragungskanälen erfolgen.

Die übliche Zuordnung zwischen Datenübertragungskanal und Kommunikationsteilnehmer ist hier nicht mehr gegeben.
Da das im Internet verwendete TCP/IP-Protokoll heute mit Abstand den größten Verbreitungsgrad hat, andererseits protokoll- und teilnehmerbedingt große übertragungsfreie Zeiten und burstartige Datenübertragungszyklen vorhanden sind, kann die gemeinsame Nutzung von Übertragungskanälen durch mehrere Kunden zu größerer Wirtschaftlichkeit führen.

Eine transparente Nutzung eines Übertragungskanals pro Kunde für beispielsweise Internetdienste war im Mobilfunkbereich bisher ebenfalls möglich (GSM-Bearer-Services von 2,4 kbps bis 14,4 kbps), die Nutzung scheiterte jedoch weitgehend an den hohen Kosten. Vergleichbares gilt für die exklusive Nutzung mehrfach geketteter Kanäle (HSCSD).

Ein ähnliches Verfahren wird beim Festnetz-Internet-Zugang genutzt. Systembedingt besitzt hier jeder Teilnehmer seine eigene Teilnehmeranschlussleitung und nutzt diese bis zur Vermittlungsstelle exklusiv. Dort wird der Internetverkehr jedoch über sog. RAS-Server (Remote Access) ausgekoppelt und auf gemeinsam genutzten IP-Übertragungskanälen geführt. Diese Verfahrensweise (Ortsverbindung) spart Leitungskosten im Gegensatz zu einer leitungsgeführten Verbindung zu einem zentralen Übergang (Fernverbindung). Es wird im analogen Netz, im ISDN-Netz sowie bei den xDSL-Verfahren angewandt.

Bedingt durch diese Verfahren im Fest- oder Mobilfunknetz können Übertragungskosten eingespart werden. Die Zeitdauer der Einwahl zu einem Internet Service Provider ist daher nicht mehr der kostenbestimmende Faktor. Vereinzelt werden bereits Flat rate-Tarife angeboten.

Im Mobilfunkbereich kann nicht auf eine vorhandene Kabelinfrastruktur zurückgegriffen werden. Daher sind die Kosten höher als im Festnetzbereich und erfordern zusätzliche Leistungsmerkmale als Nutzungsanreiz.

Eine Möglichkeit hierzu ist das Angebot eines Always connect/Always on-Dienstes. Durch dieses Verfahren ist der Kunde immer mit seinem Kommunikationspartner (z.B. Internet) verbunden und spart jeweils die Aktivierungs,-Einwahl-, Authentisierungs- und Adressierungsaufwand.
Im verkehrsfreien Zustand werden dabei kaum Netz-Resources belegt, so dass die Attraktivität des Netzes bei günstiger Kostensituation steigt.

Durch diese Verfahrensweise entstehen jedoch andere Probleme. Zur Kommunikation im öffentlichen Internet werden öffentliche IP-Adressen benötigt. Wenn die Connection Time keine nennenswerten Kosten verursacht, werden Millionen von Mobilfunk-Kunden diesen Service nutzen, so dass Millionen von IP-Adressen erforderlich sind.

Dem gegenüber sind weltweit kaum noch nennenswerte Adress-Kontingente bei den internationalen Verwaltungsinstitutionen (Toplevel Registry IANA/ICANN, bzw. Europa-Registry RIPE-NCC) erhältlich.
Um dennoch einen wettbewerbsfähigen Service anbieten zu können, muss daher ein Ausweg aus der IP-Adressproblematik gefunden werden. Es bieten sich Verfahren an, die öffentlichen IP-Adressen mehrfach zu nutzen (Multiplex, Timesharing etc.). Alle diese Verfahren besitzen jedoch prinzipbedingt die Funktionalität, dass eine Umsetzung der IP-Adressen an der Netzgrenze zwischen Telekommunikationsnetz und externem Netz, Internet etc. stattfinden muss. Die externe IP-Adresse (bei Network Address Translation), oder der externe Sessionbezug (bei Proxy-Einsatz) ist in den Übertragungsprotokollen auf der Teilnehmerseite in diesen Fällen nicht enthalten.

Der teilnehmerbezogene Datenverkehr wird im Falle einer Überwachungsmaßnahme teilnehmernah (meist in der ersten Vermittlungsstelle) ausgekoppelt und als Kopie zu den entsprechenden Bedarfsträgern geschickt. Dabei geht der Bezug zur IP-Adresse im angrenzenden IP-Netz (Internet etc.) verloren, wenn hinter der Vermittlungsstelle ein wie auch immer geartete Umwandlung der IP-Adresse stattfindet (s.o.).

In diesen Fällen kann weder der Datenverkehr des betroffenen Kunden jenseits der Telekommunikationsnetzes observiert werden, noch ist es in umgekehrten Fällen bei Überwachungsmaßnahmen im Internet oder in anderen Telekommunikationsnetzen möglich, den Kommunikationsteilnehmer über die Netzgrenze hinweg zu ermitteln, wenn eine Adressumsetzung stattfindet.

Die Umsetzung der gesetzlichen Anforderungen ist mit den bestehenden technischen Möglichkeiten nur sehr begrenzt und lückenhaft möglich, wodurch sich ein überwachungsfreier Raum für gesetzeswidrige Handlungen ergibt, der nicht observiert werden kann.

Das Dokument WO 00 56029 A offenbart ein Verfahren und eine Einrichtung zur Durchführung von Überwachungsmaßnahmen in einem Paketdatennetzwerk. Das System umfasst eine Überwachungsaktivierungskontrollfunktion, eine Überwachungsaktivierungs- und -deaktivierungsfunktion eine Überwachungsdatenerfassungsfunktion und eine Überwachungsdatenzielfunktion. Die Überwachungsdatenerfassungsfunktion kann in einem bestehenden Netzwerkknoten angeordnet werden, wobei eine Überwachungsinformation im entsprechenden PDP Kontext gesetzt wird. Die Erfassung der Überwachungsdaten wird anhand der entsprechenden Überwachungsinformation durchgeführt. Die Überwachungsdatenzielfunktion kann in einem Überwachungsbrowsingelement angeordnet werden, um die Überwachungsdaten aufgrund eines externen Befehls zu sichten, der von einem die Überwachungsaktivierungs- und -deaktivierungsfunktion enthaltenden anderen Netzelement empfangen wird. Ein Erkennen und Aktualisieren von sich ändernden Kommunikationsparametern bei Einbindung von externern Kommunikationsnetzen ist nicht beschrieben.

Ein entsprechendes Überwachungsverfahren ist ebenfalls in der WO 99 17499 A2 offenbart, wobei hier eine Kommunikationsverbindung zwischen zwei GPRS-Netzwerken beschrieben ist. Das Funktionsprinzip der Überwachung besteht darin, dass zwischen geeigneten Netzknoten des GPRS-Netzwerks, z.B. zwischen SGSN und GGSN oder SGSN und HLR, ein neuer Netzknoten, LIN: Line Interception Node, geschaltet wird. Jede Verbindung die zwischen einem Teilnehmer und dem zugeordneten SGSN aufgebaut wird, wird nun nicht zu irgendeinem GGSN des Netzwerks weitergeleitet, sondern die Teilnehmerdaten werden derart modifiziert, dass der SGSN zwangsweise zunächst eine Verbindung zum LIN aufbaut. Der LIN wertet die Verbindungsdaten aus und sendet sie erst dann an einen entsprechenden GGSN weiter. Der LIN emuliert also sowohl die Schnittstellen eines SGSN als auch eines GGSN, so dass eine vom Teilnehmer unbemerkte Überwachung durchgeführt werden kann. Aufgrund der Emulation der Schnittstellen eines SGSN und GGSN findet im LIN eine Adressumsetzung zwischen den tatsächlichen Adressen von SGSN und GGSN statt. Alternativ kann eine Überwachung auch direkt im GGSN durchgeführt werden, der die Daten über einen separaten Übertragungskanal an den LIN übermittelt, welcher die Daten dann an die LEA weiterleitet.

Der vorliegenden Erfindung liegt die Aufgabe zugrunde, ein Verfahren vorzuschlagen, auf dessen Basis eine erweiterte Überwachung von IP-basierenden Telekommunikations- und Datennetzen gemäß der gesetzlichen Richtlinien möglich ist, um die Überwachungslücke zu schließen, die dadurch entsteht, dass Internet-Adressen an der Netzgrenze zu anderen Telekommunikations- und Datennetzen (z.B. öffentliches Internet) geändert werden müssen und übergreifende

Telekommunikations- und/oder Datenverbindungen bisher nicht observiert werden können.

Gelöst wird diese Aufgabe durch die kennzeichnenden Merkmale des unabhängigen Patentanspruchs.

Die Erfindung wird unter Verwendung von Zeichnungsfiguren, die hier lediglich eine mögliche Ausführungsart am Beispiel des GPRS-Dienstes (General Packet Radio Service) in einem GSM-Netz (Global System for Mobile communications) in schematischer Darstellung beschreiben, erläutert, wobei sich anhand der Zeichnungsfiguren weitere Anwendungsgebiete und Ansprüche ergeben.

Die erfindungsgemäße Verfahrensweise ist dabei nicht auf die Anwendung in Mobilfunknetzen, und nicht auf die Anwendung in diesem beispielhaften Netz beschränkt.

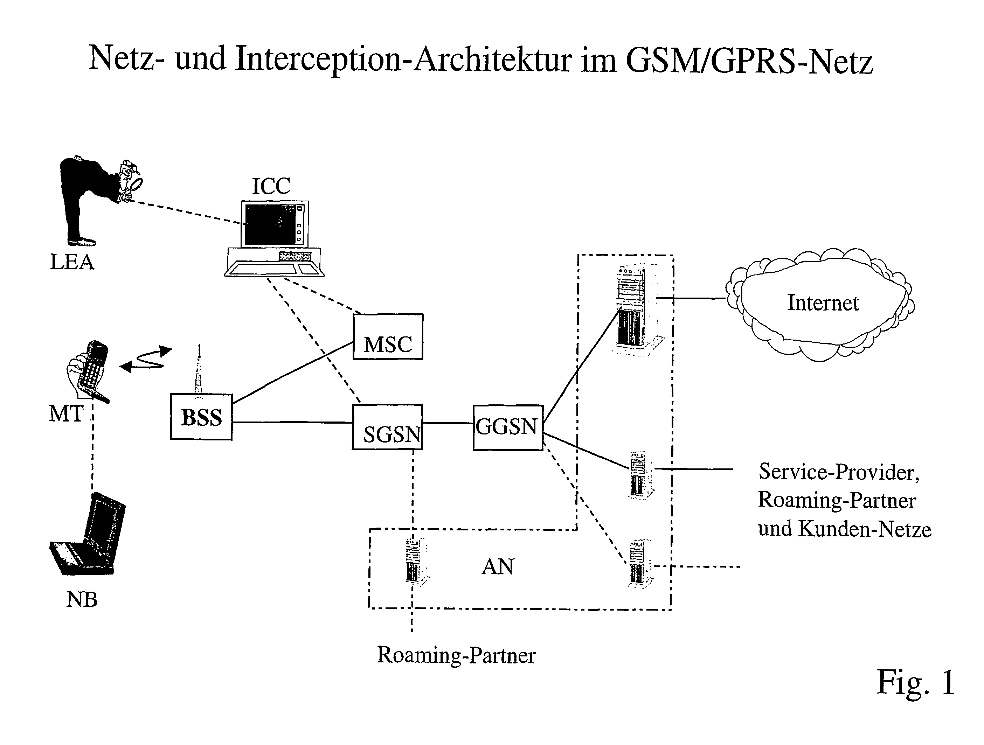

Fig. 1 zeigt die prinzipielle Verfahrensweise zur Überwachung von Teilnehmeranschlüssen im Mobilfunk-Bereich (ETSI GSM 03.33).

Die prinzipielle GPRS-Funktionalität ist beispielsweise in ETSI GSM 03.60 beschrieben. Ein Mobile Terminal (MT) kommuniziert in der Art mit dem Mobilfunknetz, dass sowohl Sprachverbindungen, als auch Datenverbindungen über das Base Station Subsystem BSS in das GSM-Netz ein-/ausgekoppelt werden.

Bei den aktuellen Netzen wird die Sprache mittels Mobile Switching Center MSC (ISDN-Vermittlungsstelle) weitergeführt, während die paketorientierten Daten über getrennte Netzkomponenten/Vermittlungskomponenten geführt werden. Dabei erfolgt zunächst ein Verbindungsaufbau (GPRS Service Activation) zum SGSN (Switching GPRS Support Node). Dort wird der Teilnehmer Authentisiert und der Verbindungswunsch samt Verbindungsberechtigung überprüft. Im positiven Fall wird ein PDP Context (Packed Data Protocol) zum GGSN (Gateway GPRS Support Node) aufgebaut.
Der GGSN ist ein IP-Router, der die Verbindung zum externen Netz herstellt.

Hierzu führt der GGSN fallspezifisch beispielsweise eine Authentisierung zu einem externen ISP (Internet Service Provider) mittels RADIUS-Prozedur durch (Remote Access Dial in User Service), wie sie im Festnetz vergleichbar bei der Einwahl zum ISP durchgeführt wird.
Anschließend erhält der GGSN die ISP-seitige IP-Adresse und übermittelt diese an das MT. In anderen Fällen ordnet der GGSN eine eigene öffentliche IP-Adresse aus dem eigenen Pool des Netzbetreibers zu, oder er verwendet eine private IP-Adresse (RFC 1918), beispielsweise wenn IP-Server im eigenen Netz adressiert werden.
Diese Funktionalität ist beispielsweise bei WAP-Betrieb üblich (Wireless Application Protocol). Die Notwendigkeit der öffentlichen IP-Adressen ist in "TCP/IP" Dr. Sidnie Feit, McGraw-Hill, ISBN 0-07-022069-7, auf S. 101 beschrieben.
Das Notebook (NB) ist optional und ermöglicht die Verwendung einer standardisierten Personal Computer- (PC) Umgebung mit Betriebssystem, Browser, Clients etc. im Anschluss an beispielsweise das öffentliche Internet.

Sind länger bestehende Sessions erforderlich (z.B. Always Connect/Always on-Betrieb), dann kann aufgrund der knappen Ressource "Öffentliche IP-Adresse" keine öffentliche IP-Adresse während der gesamten Zeit bereitgestellt werden. Abhilfe schafft beispielsweise NAT (Network Address Translation), wahlweise mit PAT (Port Address Translation, gemäß RFC 1631 u. 2663) bzw. der Einsatz von Application Gateways (WAP) oder Proxy-Lösungen (HTTP, "TCP/IP" Dr. Sidnie Feit, McGraw-Hill, ISBN 0-07-022069-7, S. 670). Diese Verfahren nutzen Timesharing oder Multiplexverfahren von IP-Adressen. Ein Teil der beschriebenen Funktionalität kann alternativ zum GGSN auch in einem separaten Access Network (AN) angeordnet sein, dass innerhalb oder außerhalb des eigentlichen GPRS Netzwerkes angesiedelt ist. Diese Anordnung erlaubt ggf. mehr Flexibilität und zusätzliche Funktionalität. Hier kann beispielsweise auch ein Firewall mit Schutzfunktion installiert sein.

Im folgenden steht der Ausdruck Access Network AN als Stellvertreter für die Funktionalität der Adresskonvertierung.

Die Überwachungsmaßnahmen für das gesamte Netz werden im ICC (Interception Control Center) administriert. Dort wird insbesondere eine Liste der Subscriber (Teilnehmerrufnummern) gepflegt, die der Maßnahme jeweils aktuell unterliegen. Diese Teilnehmerdaten werden in Form der Rufnummern (Im GSM-Netz die IMSI oder MSISDN) zu den Netzknoten übertragen (MSC/SGSN). Danach werden die betreffenden Teilnehmer automatisch endgerätenah überwacht. Jeglicher Verkehr, der zum/vom Teilnehmer durch den Vermittlungsknoten transportiert wird, wird kopiert und über das ICC zum Bedarfsträger (LEA/Law Enforcement Agency) übermittelt. Das ICC steht dabei synonym auch für die Übermittlung des Verkehrs zum LEA. Die technische Realisierung kann bedarfsweise eine unmittelbare Übertragung bestimmter Daten seitens einiger oder mehrerer Netzknoten zum LEA (oder mehreren Leas) vorsehen, wenn dadurch Übertragungskosten gespart werden. Der Vorgang wird jedoch stets vom ICC administriert (ggf. vom LEA über das ICC). Zur Vereinfachung der Erläuterungen wird im weiteren Text von einer beiderseitigen Kommunikation über das ICC ausgegangen. Die Vereinfachung steht dabei stellvertretend auch für alle administrierten Sonderübertragungen.

Alternativ zur IMSI/MSISDN können bei anderen Datennetzen, beispielsweise dem Internet, andere Subscriber-Kennungen wie beispielsweise die TCP-Adresse (optional in Kombination mit der IP-Port-Nummer) verwendet werden.

Für den Fall, dass die Internet Adresse im GGSN oder AN geändert wird, existieren jedoch zwei getrennte Kommunikationsabschnitte. Eine überwachbare Verbindung zwischen MT und der Netzgrenze (sowohl Rufnummer, als auch IP-Adresse sind bekannt), als auch eine anonyme Verbindung jenseits der Netzgrenze. Hierbei existiert kein Bezug zum MT, da die externe IP lediglich innerhalb der Konvertierungs-Komponente bekannt ist, nicht jedoch innerhalb der Protokolle zum MT geliefert wird.
D.h. diese Adresse ist bisweilen im ICC sowie beim LEA nicht bekannt und kann nicht ermittelt werden. Damit sind Kommunikationsverbindungen über die Netzgrenze hinaus nur eingeschränkt nachvollziehbar.

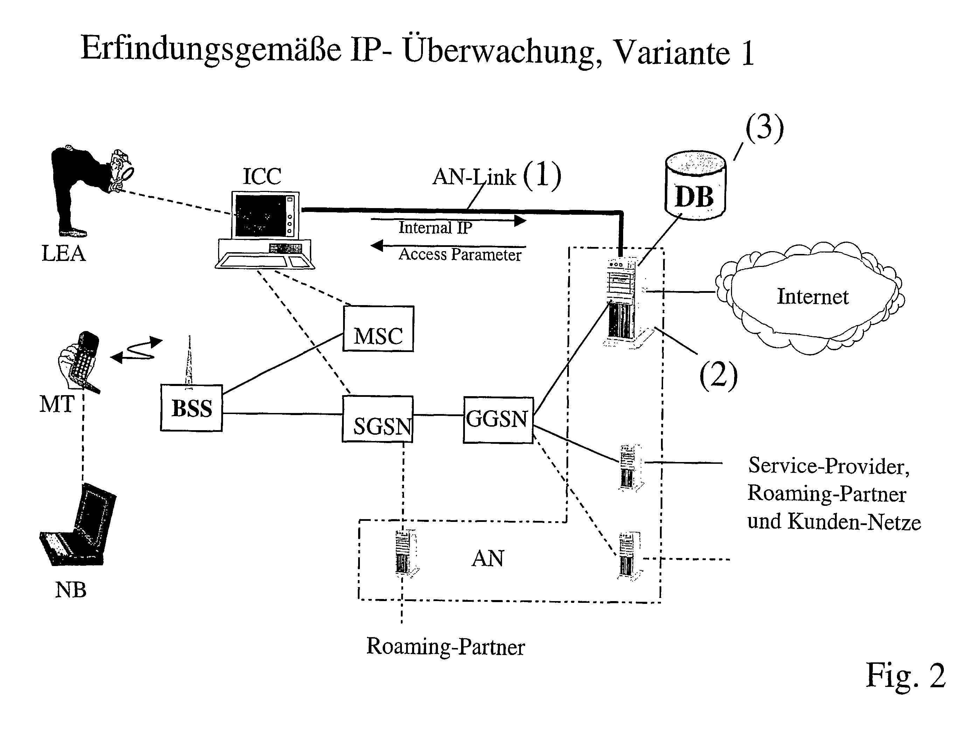

Fig. 2 zeigt eine erfindungsgemäße Verfahrensweise zur Behebung der Nachteile.

Hier dient eine zusätzliche Verbindung (Access Link (1)) dazu, eine Kommunikation zwischen ICC und der Komponente innerhalb oder außerhalb des Telekommunikations-oder Datennetzes aufzubauen, die eine Umsetzung der IP-Adressen betreibt. Beispielsweise ist hier eine Verbindung zu einem Internet Access Server IAS (2) dargestellt, der NAT durchführt und die NAT-Datenbank (3) unterhält. Der IAS ist innerhalb des AN angeordnet (Vereinfachung, s.o.).
Die NAT-Datenbank beinhaltet dabei die Zuordnung zwischen internen und externen Adressen, da die Adressumsetzung bei jedem Datenpaket durchgeführt werden muss.

Es lassen sich mehrere im Detail unterschiedliche Verfahrensweisen auf dieser Grundstruktur abbilden, die jeweils unterschiedliche Aufwandsschwerpunkte in den betrachteten Komponenten hervorrufen.
In jedem Fall sendet der IAS die erforderlichen Access-Parameter (einzeln oder gesammelt) zum ICC, wobei das ICC eine bedarfsspezifische Verarbeitung sowie die weitere Übertragung zum LEA durchführt.

Eine mögliche Verfahrensweise ist dadurch gegeben, dass der IAS bei jeder Neuanlage einer Adresszuordnung, die entsprechenden Parameter auch unmittelbar automatisch an das ICC überträgt. Dies kann für alle Teilnehmer erfolgen, oder nur für bestimmte (observierte) Teilnehmer. In letztgenannten Fall muss das IAS jedoch eine Liste pflegen, die zuvor vom ICC übermittelt wurde.
Hierbei kann es sich um eine Liste auf Rufnummernbasis handeln, oder um eine Liste auf IP-Adress-Basis im ersten Fall pflegt das IAS die komplette Zuordnungsliste, während im zweiten Fall das ICC eine Liste mit Rufnummern und internen IP-Adressen pflegt, die jeweils um die Informationen der externen Adressparameter ergänzt wird.
Da der IAS in der Regel keine Rufnummern kennt, muss die entsprechende Information verfügbar gemacht werden. Hierzu werden die internen Kommunikationsprotokolle zwischen MT und IAS um eine entsprechende Information erweitert, oder der IAS startet eine Anfrage bei einer im Netz angesiedelten Datenbank, die diese Information beinhaltet.

Umgekehrt besitzt das ICC in der Regel keine IP-Adressen der observierten Teilnehmer, da diese ggf. dynamisch geändert werden können und keine sinnvolle Teilnehmerkennung in einem Telekommunikationsnetz darstellen. Werden IP-Adressen als Selektionskriterien vom ICC zum IAS übertragen, so müssen diese Daten für das ICC zuvor verfügbar gemacht werden. Dies kann durch Abfrage der o.g. Datenbank, oder auch durch Extraktion der überwachten Protokolldaten im ICC erfolgen, die im Vermittlungssystem ausgekoppelt/kopiert und zum ICC geführt werden. In diesem Fall pflegt das ICC eine demgemäße Referenzliste.

Werden alle Daten aller Teilnehmer seitens IAS geliefert, muss das ICC die bedarfsgerechte Selektion mit Reduktion der Teilnehmer durchführen, die tatsächlich einer Überwachung unterliegen. Dazu unterhält das IAS oder alternativ das ICC eine o.g. Datenbank bzw. erfragt die Parameter jeweils bei einer netzinternen Datenbank - je nachdem, ob die Adress-Konvertierungsparameter als Referenz zu einer internen IP-Adresse oder einer Teilnehmerrufnummer übertragen werden.

Unterhält der Kunde Verbindungen zu mehreren Netzen, müssen bedarfsweise weitere Acces Links zu anderen Komponenten vorhanden sein.

Das Verfahren ist daher mit beträchtlichem Aufwand verbunden, insbesondere ist eine separate Verbindung (physikalisch oder logisch) zwischen ICC und IAS erforderlich, eine entsprechende Bearbeitung im ICC sowie im AN (IAS), eine Datenbank in IAS und/oder ICC und ggf. an zentraler Stelle sowie eine Protokollabstimmung zum LEA zwecks Anordnung der öffentlichen IP-Adresse innerhalb der Informationsprotokolle.

Die gesetzlichen Anforderungen sind jedoch erfüllbar, so dass die externen Adressparameter jederzeit zum Bedarfsträger übermittelt werden können.

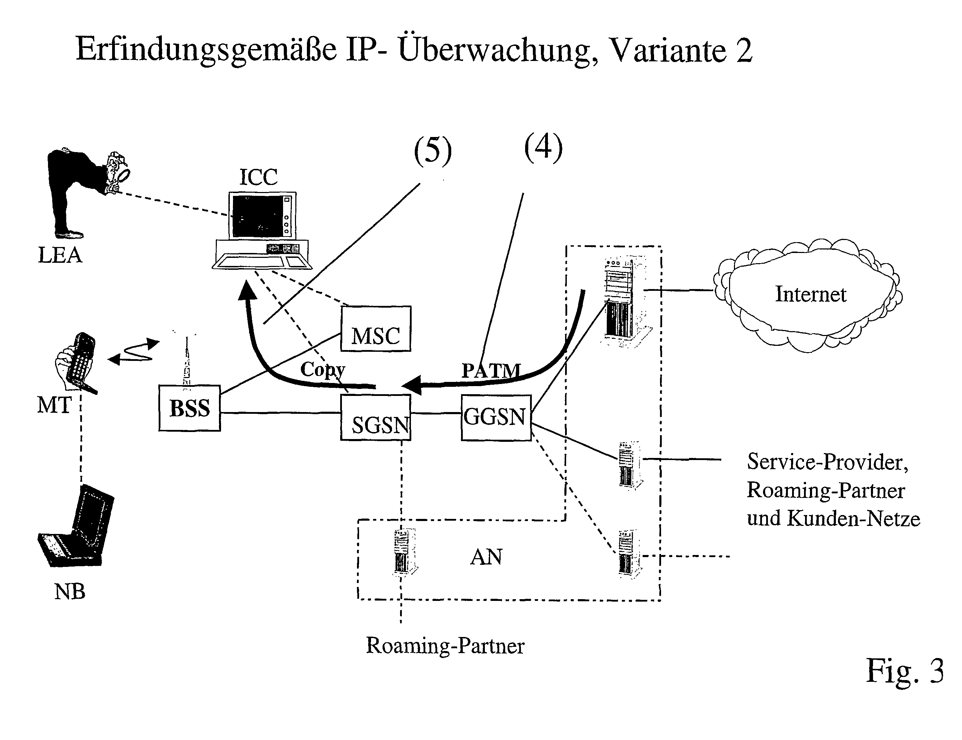

Fig. 3 zeigt eine alternative erfindungsgemäße Verfahrensweise zur Lösung der Problematik. Diese Variante erfordert weniger Aufwand als Variante 1 und ist daher in der Mehrzahl der Fälle der ökonomischere Weg.

Die Netzstruktur ist identisch zu den bisherigen Betrachtungsfällen. Im Falle einer Adresstransformation speichert der durchführende Netzknoten (NAT, PAT, Proxy, Gateway etc.) die Werte in einer Tabelle oder Datenbank ab und sendet unmittelbar die betreffenden Parameter, die die Kommunikation hinter dem Netzübergang (im öffentlichen Internet o.ä.) bestimmen (IP-Adresse, Port-Adresse, Session-Kennung, Timeout etc.) mittels einer Public Address Transmission Message PATM an das MT. Hierzu steht ihm als Adressierung die interne Teilnehmerrufnummer, die IP-Adresse, die Geräte-Kennung o.ä. zur Verfügung. Da sämtlicher Verkehr der betreffenden MT im SGSN überwacht und kopiert wird, gelangt auf diese Weise auch die PATM über das ICC zum LEA und kann für weitere Überwachungsmaßnahmen ausgewertet werden.

Auf diese Art und Weise ist garantiert, dass alle erforderlichen Informationen automatisch und unmittelbar stets aktuell übertragen werden, wobei keine zusätzlichen Leitungsverbindungen zwischen ICC und AN, keine Zusatzmaßnahmen im ICC und nur ein geringer Aufwand im AN betrieben werden muss. Als PATM bietet sich beispielsweise die Verwendung einer bereits bekannten Protokollkomponente im IP-Protokoll an, die im Regelfall im MT nicht benötigt wird und dort keine funktionale Reaktion auswirkt. Nutzbare Beispiele dafür sind Messages aus dem Internet Control Message Protocol ICMP (Ping Echo Message, Information oder Jet Unassigned, "TCP/IP" Dr. Sidnie Feit, McGraw-Hill, ISBN 0-07-022069-7, S. 185) oder beispielsweise einem Router-Protokoll (z.B. Open Shortest Path First- Hello-Message, "TCP/IP" Dr. Sidnie Feit, McGraw-Hill, ISBN 0-07-022069-7, S. 240). Die Informationsfelder müssen gemäß den zu übertragenden Adressierungsinformationen gestaltet werden.

### Abkürzungen

- AN: Access Network
- BSS: Base Station Subsystem
- GGSN: Gateway GPRS Support Node
- GPRS: General Packet Radio System
- ICC: Interception Control Center
- LEA: Law Enforcement Agency
- LI: Lawful Interception
- MSC: Mobile Switching Center
- MT: Mobile Terminal
- PATM: Publick Address Tranmission Message
- SGSN: Switching GPRS Support Node
- WAP: Wireless Application Protocol

### Zeichnungen und Anlagen

- Fig. 1:: Netz- und Interception-Architektur im GSM/GPRS-Netz
- Fig. 2:: Erfindungsgemäße IP- Überwachung, Variante 1
- Fig. 3:: Erfindungsgemäße IP- Überwachung, Variante 2

## Patentansprüche

1. Verfahren zur Durchführung von Überwachungsmaßnahmen in Telekommunikations- und Datennetzen vorzugsweise mit IP-Protokoll, bei dem, ausgehend von einem ersten Kommunikations- und Datennetz, in einem Access Network AN, das einen Übergang zu mindestens einem weiteren externen Telekommunikations- und Datennetz, zum öffentlichen Internet, zu Service-Providern oder zu privaten Netzen bereitstellt, Adresskonvertierungseinrichtungen vorgesehen sind, die eine Adressumsetzung zwischen im ersten Telekommunikations- und Datennetz verwendeten Adressen und und im zweiten Telekommunikations- und Datennetz verwendeten Adressen von Teilnehmern durchführen,
wobei die Adresskonvertierungseinrichtungen bei jeder Neuanlage einer Adresszuordnung Informationen über die in den externen Kommunikations- und Datennetzen verwendete Kommunikationsparameter, die im internen Verkehr zwischen Teilnehmereinrichtung und AN nicht für die Kommunikation verwendet werden und daher im Zuge einer Überwachungsmaßnahme hier auch nicht erfasst werden können, jeweils aktuell und automatisch auf separaten oder mitgenutzten Übertragungskanälen nach Aufforderung oder spontan zu einem Interception Control Center ICC und/oder zu einem Bedarfsträger bzw. zu den Bedarfsträgern übertragen, wobei jeweils separate oder mitgenutzte Übertragungskanäle zwischen dem ICC und einem oder mehreren AN genutzt werden, auf denen ein Protokollverkehr zwischen ICC und AN ausgetauscht wird, wobei der AN mittels Einzel- oder Gesamtadministration seitens ICC die Information erhält, welche Verkehrsbeziehungen einer Überwachung unterstehen und auf umgekehrtem Wege das ICC informiert wird, welche externen Kommunikationsparameter jeweils genutzt werden,
das AN verwaltet eine ICC-seitige Administrationsliste für das gesamte Netz in Form einer gleichen Liste für alle Netzknoten und bei jedem Kommunikations- oder Konvertierungsvorgang verifiziert, ob die zugehörigen Datagramme einer Observierung unterliegen, wonach im positiven Fall eine Information zum ICC gesendet wird.

2. Verfahren gemäß Anspruch 1, **dadurch gekennzeichnet, dass** das AN unaufgefordert und automatisch jede Adresskonvertierung an das ICC überträgt, die aktuell gerade eingerichtet wird, wobei das ICC in diesem Fall die Selektion der überwachten Einzelmaßnahmen aus der Gesamtmenge der zur Verfügung stehenden Information durchführt.

3. Verfahren gemäß einem der Ansprüche 1 oder 2, **dadurch gekennzeichnet, dass** das AN bei Einzelfällen seitens ICC abgefragt wird und demgemäß die gewünschte Information an das ICC liefert.

4. Verfahren gemäß Anspruch 1, **dadurch gekennzeichnet, dass** das AN bei jeder Adresstransformation, in Form einer Neuanlage/Neuzuordnung einer externen Adresse, eine diesbezügliche Protokollinformation über die übliche Übertragungseinrichtungen und -wege an das MT versendet,
wobei die Adressinformation auf diese Weise automatisch über die in den Netzknoten integrierten Überwachungseinrichtungen für Signalisierungs- und Datenverkehr zum ICC und/oder zum Law Enforcement Agency LEA oder mehreren LEAs gelangt, ohne dass zusätzlicher Kommunikations- oder Protokollaufwand zwischen ICC und AN zu leisten ist.

5. Verfahren gemäß Ansprüche 1 oder 4, **dadurch gekennzeichnet, dass** zur Übertragung der Adressinformation ein bereits definiertes Protokollelement genutzt wird, welches in einem Mobile Terminal MT ohne funktionale Störungen der aktuellen Kommunikationsbeziehung empfangen wird, wobei es für den Regelbetrieb aber nicht ausgewertet bzw. nicht notwendig ist und im Datenfeld mit der notwendigen Zusatzinformation ausgestattet ist.

6. Verfahren gemäß Anspruche 5, **dadurch gekennzeichnet, dass** ICMP- oder Routing-Protokolle bzw. deren Echo-, Alive- oder Informations-Nachrichten genutzt werden.

## Claims

1. Method for carrying out monitoring activities in telecommunications and data networks preferably using the IP protocol in which, starting from a first communications and data network, in an access network AN providing a gateway to at least one other external telecommunications and data network, to the public internet, to service providers or to private networks address conversion facilities are provided which carry out address conversion between addresses used in the first telecommunications and data network and addresses of subscribers used in the second telecommunications and data network, wherein the address conversion facilities for each new establishment of an address allocation transmit information about the communications parameters used in the external communications and data networks, which parameters are not used for communication in the internal traffic between the subscriber device and AN and accordingly also cannot be captured here in the course of a monitoring activity, currently and automatically in each case on separate or shared transmission channels on request or spontaneously to an interception control center ICC and/or to a demand driver or to the demand drivers, wherein in each case separate or shared transmission channels between the ICC and one or more ANs are used on which protocol traffic is exchanged between the ICC and AN, wherein by means of individual or overall administration on the part of the ICC the AN receives information as to which traffic links are subject to monitoring and by the reverse route the ICC is informed which external communications parameters are used in each case, the AN administering an ICC-held administration list for the entire network in the form of an identical list for all network nodes and verifying in each communications or conversion operation whether the associated datagrams are subject to observation after which in positive cases an information item is sent to the ICC.

2. Method according to claim 1, **characterised in that** the AN unbidden and automatically transmits to the ICC every address conversion which is currently just being set up, wherein the ICC in this case carries out the selection of the monitored individual activities from the total volume of available information.

3. Method according to one of claims 1 or 2, **characterised in that** the AN is interrogated in individual cases by the ICC and correspondingly supplies the desired information to the ICC.

4. Method according to claim 1, **characterised in that** for each address transformation in the form of a new establishment/new allocation of an external address the AN sends protocol information related to this to the MT via the usual transmission equipment and routes, wherein the address information arrives automatically in this way via the monitoring equipment for signalling and data traffic integrated in the network nodes at the ICC and/or at the Law Enforcement Agency LEA or a plurality of LEAs without additional communications or protocol outlay between the ICC and AN being incurred.

5. Method according to claims 1 or 4, **characterised in that** for transmitting the address information an already defined protocol element is used which is received in a mobile terminal MT without functional disturbances to the current communications link, wherein in regular operation, however, it is not evaluated or is not needed and is furnished in the data field with the necessary additional information.

6. Method according to claim 5, **characterised in that** ICMP or routing protocols or the echo, alive or information messages thereof are used.

## Revendications

1. Procédé pour exécuter des mesures de surveillance dans des réseaux de télécommunication et de données de préférence avec un protocole IP, selon lequel à partir d'un premier réseau de communication et de données, dans un réseau d'accès AN qui offre une passerelle vers au moins un autre réseau de télécommunication et de données extérieur, vers l'Internet public, vers des fournisseurs de services ou vers des réseaux privés, il est prévu des dispositifs de conversion d'adresses qui effectuent une conversion d'adresses entre les adresses utilisées dans le premier réseau de télécommunication et de données et les adresses d'abonnés utilisées dans le deuxième réseau de télécommunication et de données, étant précisé que les dispositifs de conversion d'adresses, à chaque réinstallation d'une affectation d'adresse, transmettent de manière actualisée et automatique sur des canaux de transmission séparés ou utilisés conjointement, à la demande ou spontanément, à un centre de contrôle d'interception ICC et/ou à un ou plusieurs supports facultatifs des informations sur les paramètres de communication qui sont utilisés dans les réseaux de communication et de données externes et qui ne sont pas utilisés pour la communication dans le trafic interne entre l'appareil d'abonné et l'AN et qui ne doivent donc pas non plus être compris ici dans le cadre d'une mesure de surveillance, étant précisé qu'on utilise entre l'ICC et un ou plusieurs AN des canaux de transmission séparés ou utilisés conjointement sur lesquels un trafic de protocole est échangé entre l'ICC et l'AN, et étant précisé que l'AN reçoit à l'aide de l'administration individuelle ou globale du côté de l'ICC l'information indiquant quelles relations de trafic relèvent d'une surveillance et l'ICC est informé en sens inverse des paramètres de communication externes qui sont utilisés à chaque fois, l'AN gère une liste administrative prévue côté ICC pour tout le réseau, sous la forme d'une liste identique pour tous les noeuds de réseau, et vérifie pour chaque opération de communication ou de conversion si les datagrammes correspondants sont soumis à une observation, après quoi, dans le cas positif, une information est envoyée à l'ICC.

2. Procédé selon la revendication 1, **caractérisé en ce que** l'AN, sans invitation et automatiquement, transmet à l'ICC chaque conversion d'adresses qui est précisément installée actuellement, l'ICC effectuant dans ce cas la sélection des mesures individuelles surveillées faite dans la quantité totale d'informations disponibles.

3. Procédé selon la revendication 1 ou 2, **caractérisé en ce que** l'AN est interrogé dans des cas individuels côté ICC et fournit en conséquence l'information voulue à l'ICC.

4. Procédé selon la revendication 1, **caractérisé en ce que** l'AN, à chaque transformation d'adresse sous la forme d'une réinstallation/réaffectation d'une adresse externe, envoie au terminal mobile MT une information de protocole à ce sujet, par l'intermédiaire des dispositifs et voies de transmission courants, étant précisé que l'information d'adresse arrive ainsi automatiquement à l'ICC et/ou au service autorisé LEA ou à plusieurs LEA, par l'intermédiaire des dispositifs de surveillance intégrés dans les noeuds de réseau pour le trafic de signalisation et de données, sans qu'une dépense supplémentaire de communication ou de protocole doive être faite entre l'ICC et l'AN.

5. Procédé selon les revendications 1 ou 4, **caractérisé en ce que** pour transmettre l'information d'adresse, on utilise un élément de protocole déjà défini, qui est reçu dans un terminal mobile MT sans perturbations fonctionnelles de la relation de communication actuelle, étant précisé toutefois qu'il n'est pas évalué ou qu'il n'est pas nécessaire pour le fonctionnement de régulation et qu'il est équipé dans la zone de données de l'information supplémentaire nécessaire.

6. Procédé selon la revendication 5, **caractérisé en ce qu'**on utilise les protocoles ICMP ou d'acheminement ou leurs messages d'écho, d'existence ou d'information.
